Europäisches Patentamt

(19) **European Patent Office**

**Office européen des brevets**

(11) Numéro de publication: **0 014 120**

**B1**

(12) # FASCICULE DE BREVET EUROPEEN

(45) Date de publication du fascicule du brevet: **09.02.83**

(51) Int. Cl.³: **B 01 L 3/02**

(21) Numéro de dépôt: **80400040.4**

(22) Date de dépôt: **11.01.80**

(54) **Pipette à déplacement positif.**

(30) Priorité: **19.01.79 FR 7901335**

(43) Date de publication de la demande:
**06.08.80 Bulletin 80/16**

(45) Mention de la délivrance du brevet:
**09.02.83 Bulletin 83/6**

(84) Etats contractants désignés:
**AT BE CH DE GB IT LU NL SE**

(56) Documents cités:
**FR - A - 2 324 366**
**FR - A - 2 343 228**
**FR - A - 2 351 402**
**FR - A - 2 383 704**

(73) Titulaire: **Marteau d'Autry, Eric**
**72, rue Gambetta**
**F-95000 Villiers-le-Bel (FR)**

(72) Inventeur: **Marteau d'Autry, Eric**
**72, rue Gambetta**
**F-95000 Villiers-le-Bel (FR)**

(74) Mandataire: **Corre, Jacques Denis Paul et al,**
**Cabinet Regimbeau 26, Avenue Kléber**
**F-75116 Paris (FR)**

Courier Press, Leamington Spa, England.

Pipette à déplacement positif

La présente invention concerne une pipette de précision à déplacement positif destinée au prélèvement et à la distribution de faibles quantités de liquide.

La pipette selon l'invention est du type comportant:

— un corps essentiellement tubulaire obturé respectivement à son extrémité supérieure par un bouchon présentant un orifice central et à son extrémité inférieure par une capsule recevant de façon amovible un tube capillaire calibré;

— un piston commandé, dans son déplacement étanche à l'intérieur dudit tube capillaire, par une tige de commande traversant l'orifice ménagé dans ledit bouchon supérieur;

— un organe de pincement dont les branches à élasticité radiale assurent la préhension dudit piston par son extrémité supérieure, et

— un fourreau apte à se déplacer dans ledit corps tubulaire, entre une butée supérieure et une butée inférieure, à l'encontre d'une force de rappel élastique vers le haut exercée par un ressort principal.

La totalité des pipettes de ce type connues à ce jour présentent des inconvénients de montage, de calibrage exact et de facilité d'utilisation. Une telle technique antérieure peut par exemple être illustrée par les demandes de brevet français n° 2 383 704 et n° 2 324 366.

La pipette selon l'invention permet précisément de pallier ces inconvénients de la technique antérieure. Elle se trouve caractérisée en ce que l'organe de pincement de l'extrémité supérieure du piston est solidaire de l'extrémité inférieure de ladite tige de commande du piston et se trouve logé à l'intérieur dudit fourreau, l'ouverture dudit organe de pincement par écartement radial de ses branches élastiques étant obtenue par déplacement dudit organe de pincement à l'encontre de la force exercée par un second ressort qui présente une résistance très supérieure à celle dudit ressort principal et qui se trouve mis en place entre l'extrémité inférieure de la tige de commande du piston et un épaulement interne dudit fourreau.

D'autres avantages et caractéristiques de la présente invention apparaîtront à la lecture de la description détaillée faite ci-après en référence aux figures annexées, sur lesquelles:—

— la figure 1 représente une vue en coupe d'un premier mode de réalisation de la pipette selon l'invention, et

— la figure 2 représente une vue en coupe d'un second mode de réalisation de la pipette selon l'invention.

De façon classique, la pipette à déplacement positif selon l'invention comporte un corps essentiellement tubulaire 10 obturé respectivement à son extrémité supérieure par un bouchon 12 présentant un orifice central 14, et à son extrémité inférieure par une capsule 16 destinée à recevoir de façon amovible un tube capillaire calibré 18 dans lequel se déplace de façon étanche un piston 20 commandé dans son déplacement par une tige de commande 22 traversant l'orifice central 14 ménagé dans ledit bouchon supérieur 12. Le tube capillaire 18 est de préférence constitué par un tube en verre calibré en diamètre mais non pas en longueur. De manière à rendre l'extrémité inférieure du tube capillaire 18 non agressive, cette dernière sera par exemple avantageusement brûlée. Dans la pratique, la longueur du tube capillaire 18, non tolérancée, peut donc ainsi varier par exemple de l'ordre de plus ou moins environ 1 mm.

Conformément à la présente invention, le piston 20 présente au moins une zone d'étanchéité. Ce piston 20 peut par exemple être avantageusement réalisé sous la forme d'un fil d'acier inoxydable présentant, dans le cas de tige de petits diamètres, un enrobage, par exemple un enrobage en téflon. Pour les fils de plus grands diamètres, on aura par exemple recours, tel qu'illustré aux dessins annexés, à la mise en place, à l'extrémité inférieure du piston 20, d'une goutte de téflon 24 venant au contact intime de la surface intérieure du tube capillaire 18. La longueur du piston 20 n'est pas tolérancée; on notera cependant que la longueur de ce dernier doit être supérieure à la longueur du tube capillaire 18.

La pipette à déplacement positif selon l'invention comporte en outre un fourreau 26 apte à se déplacer alternativement dans le corps tubulaire 10, le déplacement dudit fourreau 26 étant limité dans sa course par une butée supérieure et par une butée inférieure. Le fourreau 26 est ainsi susceptible de se déplacer sous l'action d'une force exercée sur le bouton poussoir 28 de la tige de commande 22, à l'encontre d'une force de rappel élastique dirigée vers le haut exercée par un ressort principal 30.

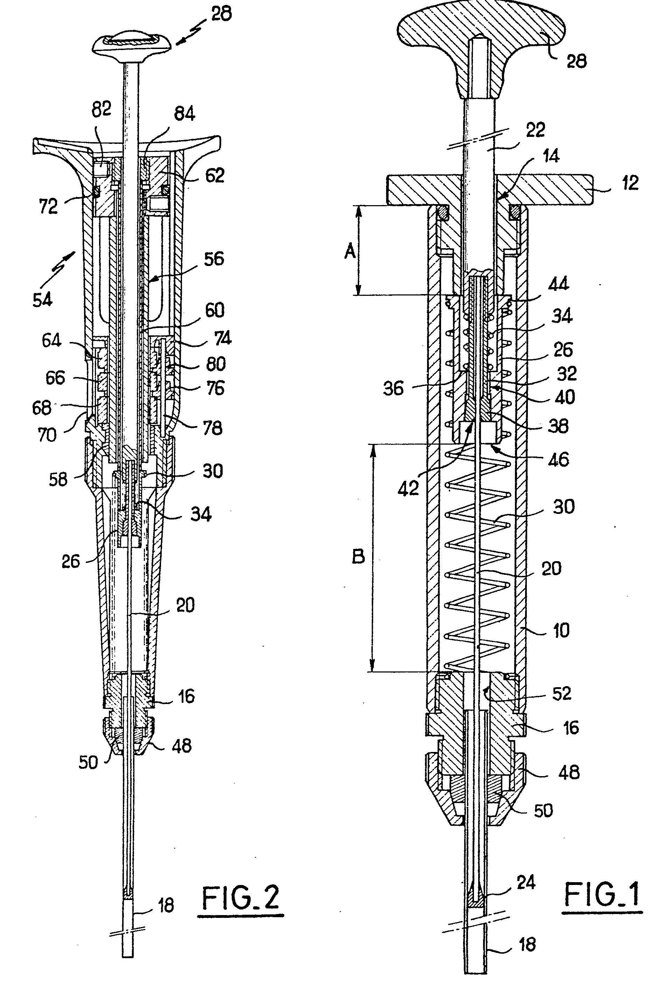

Dans le mode de réalisation illustré à la figure 1, la butée inférieure limitant la course vers le bas du fourreau 26, et par conséquent du piston 20, est constituée par la surface supérieure de la capsule 16 obturant l'extrémité inférieure dudit corps tubulaire 10. La butée supérieure limitant la course vers le haut du fourreau 26, et par conséquent du piston 20, est constituée par la surface inférieure du bouchon 12 obturant l'extrémité supérieure du corps tubulaire 10. Il apparaît donc clairement que la course utile du piston 20 correspond à la course référencée *B* sur la figure 1.

La butée supérieure, donc le bouchon 12 et en particulier sa partie inférieure formant entretoise représentée par la lettre *A* sur la figure 1, doit présenter une hauteur précise tolérancée. On comprendra aisément à l'examen de la figure 1, que dans ce premier mode de réalisation de la pipette comportant une butée supérieure fixe, cette butée peut, en fait, être interchangée en vue de modifier le volume de liquide à prélever. On indiquera dans le tableau ci-après, à titre d'exemple, les relations devant exister entre les diverses grandeurs variables afin d'obtenir une pipette susceptible de prélever des volumes variant entre 1 et 150 microlitres.

| $\phi$ Capillaire | Volume $\mu$l | Course mm "B" | Hauteur entretoise mm "A" | |
|---|---|---|---|---|
| $\phi$ Capillaire $\phi$ 0,4006 | 1 | 7,93 | 33,97 | $\pm$0,01 |
| | 1,5 | 11,895 | 30,005 | $\pm$0,01 |
| | 2 | 15,86 | 26,04 | $\pm$0,01 |
| | 2,5 | 19,825 | 22,075 | $\pm$0,01 |
| | 3 | 23,79 | 18,11 | $\pm$0,01 |
| $\phi$ Capillaire $\phi$ 0,797 | 2 | 6 | 35,9 | $\pm$0,01 |
| | 3 | 8 | 33,9 | $\pm$0,01 |
| | 4 | 10 | 31,9 | $\pm$0,01 |
| | 5 | 12 | 29,9 | $\pm$0,01 |
| | 6 | 14 | 27,9 | $\pm$0,01 |
| | 7 | 16 | 25,9 | $\pm$0,01 |
| | 8 | 18 | 23,9 | $\pm$0,01 |
| | 9 | 20 | 21,9 | $\pm$0,01 |
| | 10 | | | |
| $\phi$ Capillaire $\phi$ 1,261 | 10 | 7,93 | 33,97 | $\pm$0,01 |
| | 15 | 11,895 | 30,005 | $\pm$0,01 |
| | 20 | 15,86 | 26,04 | $\pm$0,01 |
| | 25 | 19,825 | 22,075 | $\pm$0,01 |
| | 30 | 23,79 | 18,11 | $\pm$0,01 |
| $\phi$ Capillaire $\phi$ 2,523 | 30 | 6 | 35,9 | $\pm$0,01 |
| | 40 | 8 | 35,9 | $\pm$0,01 |
| | 50 | 10 | 31,9 | $\pm$0,01 |
| | 60 | 12 | 29,9 | $\pm$0,01 |
| | 75 | 15 | 26,9 | $\pm$0,01 |
| | 80 | 16 | 25,9 | $\pm$0,01 |
| | 100 | 20 | 21,9 | $\pm$0,01 |
| | 120 | 24 | 17,9 | $\pm$0,01 |
| | 150 | 30 | 11,9 | $\pm$0,01 |

La pipette à déplacement positif selon l'invention est en outre caractérisée par le fait qu'elle comporte un organe de pincement 32 de l'extrémité supérieure du piston 20. Cet organe de pincement est solidaire de l'extrémité inférieure de ladite tige de piston 22, cette solidarisation entre organe de pincement et tige de piston pouvant être réalisée par tout moyen approprié.

Tel que représenté aux dessins annexés l'organe de pincement 32 se trouve entièrement logé dans le fourreau 26. L'organe de pincement 32 destiné à assurer la préhension de l'extrémité supérieure du piston 20 est réalisé de manière que son ouverture s'effectue par écartement radial, obtenu par déplacement de l'ensemble de l'organe de pincement 32 à l'encontre de la force exercée par un second ressort 34 qui présente une résistance très supérieure à celle du ressort principal 30. De façon pratique, cela signifie qu'une pression égale ou même légèrement supérieure à la pression nécessaire à comprimer totalement le ressort principal 30 ne permet en aucun cas de comprimer le second ressort 34. Ce dernier ne sera donc comprimé que si l'on exerce sur le bouton poussoir 28 de la tige de commande 22 du piston 20 une pression encore bien supérieure.

Dans le mode de réalisation illustré aux dessins annexés, le seconde ressort 34 est mis en place entre l'extrémité inférieure de la tige de piston 22 et un épaulement 36 dudit fourreau 26.

L'organe de pincement 32 du piston 20 est constitué par une pièce généralement tubulaire dont l'extrémité supérieure est solidaire de la tige de commande 22 du piston 20 et dont l'extrémité inférieure se termine par une pluralité de branches élastiques 38. Au repos, ces branches élastiques 38 ont tendance à s'écarter radialement. Lorsque la pipette se trouve montée, le second ressort 34 tend à rappeler élastiquement l'organe de pincement 32 vers le haut dans une zone rétrécie 40 du fourreau 26, laquelle permet précisément de solliciter lesdites branches 38 au rapprochement radial, c'est-à-dire qu'elle entraîne la fermeture de l'organe de pincement 32.

Selon une caractéristique additionnelle de la présente invention, l'ouverture de l'organe de pincement 32 présente, du côté de ses branches élastiques 38, un chanfrein 42 destiné à faciliter l'introduction de l'extrémité supérieure du piston 20 dans ledit organe de pincement.

Dans le mode de réalisation particulier illustré par les dessins, le ressort principal 30 prend appui, d'une part, sur la surface intérieure de la capsule 16 au niveau d'un décrochement, et d'autre part, sur un épaulement extérieur 44 du fourreau 26. On observera également qu'en position de repos, c'est-à-dire lorsqu'aucune pression n'est exercée sur la tige de commande 22 par l'intermédiaire du bouton poussoir 28, l'extrémité inférieure de l'organe de pincement 32 se situe en retrait par rapport à l'orifice inférieure 46 du fourreau 26.

Le montage et le remplacement du tube capillaire 18 et/ou du piston 20 s'effectue alors de la manière suivante. On commence par engager le tube capillaire 18 dans la capsule 16. Pour ce faire, l'extrémité inférieure de ladite capsule 16 est munie d'un filetage destiné à coopérer avec un mandrin 48, avec interposition d'une olive fendue ou d'une olive en matière souple 50. Le vissage du mandrin 48 sur la capsule 16 permet ainsi de réaliser la compression de l'olive 50 et le maintien en place du tube capillaire 18 dans ladite capsule. On notera par ailleurs que le chanfrein réalisé sur l'extrémité de l'olive 50 ainsi que le chanfrein correspondant ménagé à l'intérieur du mandrin 48 sont agencés en position inversée de manière que, pendant le serrage, il ne se produise aucun déplacement du tube capillaire 18. Comme cela se trouve représenté à la figure 1, le tube capillaire 18 ne se trouve pas engagé complètement dans l'orifice 52 ménagé dans la capsule 16. Lorsque le tube capillaire 18 est mis en place dans la capsule 16 et bloqué par vissage du mandrin 48, on actionne la tige de commande 22 du piston 20 de manière à comprimer le ressort principal 30, puis on exerce une force supplémentaire destinée à commander la seconde course de la tige de piston, qui permet de réaliser l'écartement des branches élastiques 38 de l'organe de pincement 32. On introduit alors le piston 20 à l'intérieur du tube 18 de façon à faire remonter l'extrémité supérieure dudit piston à l'intérieur de l'organe de pincement 32. On relâche alors la tige de commande 22, ce qui permet, sous l'action du second ressort 34, de réaliser la fermeture de l'organe de pincement 32 qui provoque donc la solidarisation du piston 20 et de la tige de commande 22. Sous l'action de la force élastique de rappel exercée par le ressort principal 30, l'ensemble tige de commande 22 et piston 20 remonte ainsi en position haute. Lors de cette étape de montage, on s'arrange, éventuellement en répétant les opérations précédentes, pour que la goutte 24 de l'extrémité inférieure du piston 20 dépasse du tube capillaire 18. On exerce ensuite une pression sur le bouton poussoir 28 de la tige de commande 22, de manière à comprimer complètement le ressort principal 30 sans pour autant comprimer le ressort secondaire 34, c'est-à-dire qu'on arrive à une position dans laquelle la surface limite inferieure du fourreau 26 vient au contact de la capsule 16. On agit alors sur le mandrin 48 de manière à libérer à nouveau le tube capillaire 18 pour amener en parfaite coïncidence l'extrémité libre du piston 20, par exemple la goutte de téflon 24, avec l'extrémité libre brûlée du tube capillaire 18, puis l'on bloque à nouveau le tube capillaire 18 par vissage du mandrin 48. La pipette selon l'invention se trouve donc ainsi prête à être utilisée.

Dans un second mode de réalisation de la pipette selon l'invention, tel qu'illustré à la figure 2, la butée supérieure limitant la course vers le haut dudit fourreau 26 et du piston 20 est constituée par une butée réglable en position verticale au moyen d'un mécanisme de réglage couplé à une ensemble indicateur. De façon connue, ce mécanisme de réglage couplé à l'ensemble indicateur de volume est constitué par:

—une tige creuse filetée extérieurement qui coopère avec un insert fileté intérieurement fixé de façon immobile en rotation et en translation à l'intérieur du boîtier, ladite tige creuse filetée étant agencée pour entraîner dan son mouvement la butée supérieure réglable limitant vers le haut la course dudit fourreau;

—un écrou de réglage apte à être actionné de l'extérieur du boîtier pour entraîner en rotation ladite tige creuse filetée;

—des tambours indicateurs du volume à distribuer, portant des indices visibles au travers d'une fenêtre de lecture ménagée dans le boîtier, lesdits tambours étant fixés sur ladite tige creuse filetée de manière à l'entourer tout en autorisant son mouvement au travers des tambours par ailleurs équipés de moyens d'entraînement aptes à commander le mouvement relatif des tambours en dépendence du mouvement de rotation de ladite tige creuse filetée, et

—des moyens de blocage de ladite tige creuse filetée, aptes à immobiliser cette dernière dans la position choisie.

De façon plus précise, et en référence à la figure 2, ce mécanisme de réglage, couplé à l'ensemble indicateur de volume, peut être réalisé avantageusement de la manière suivante. Le boîtier supérieur 54 de la pipette contient une tige creuse filetée extérieurement 56 qui coopère avec un insert 58 fileté intérieurement fixé de façon immobile en rotation et en translation à l'intérieur du boîtier supérieur 54, la tige creuse filetée étant agencée pour entraîner dans son mouvement la butée supérieure réglable limitant vers le haut la course du fourreau 26 et du piston 20.

Dans le mode de réalisation décrit, on constate qu'en position de repos, c'est-à-dire en position haute, le fourreau 26 vient en contact

intime avec l'extrémité inférieure de la butée de limitation de course vers le haut. Dans ce mode de réalisation cette butée, variable en position verticale, est représentée par l'extrémité inférieure d'un manchon 60 qui est rendu solidaire de la tige creuse filetée 56. Ce manchon 60 doit pouvoir coulisser sur la tige de commande 22 du piston 10 et se trouve placé à l'intérieur de la tige creuse filetée 56. Le but de ce manchon, décrit plus complètement ci-après, est de permettre un calibrage de l'ensemble indicateur de volume. La partie inférieure du manchon 60 dépasse légèrement de l'extrémité inférieure de la tige creuse filetée 56 et forme la partie la plus avancée de l'ensemble de réglage de volume.

Un écrou de réglage 62 apte à être actionné de l'extérieur du boîtier 54 permet d'entraîner en rotation ladite tige creuse filetée extérieurement 56. D'autre part, les tambours 64, 66 et 68 indicateurs du volume à distribuer, portant des indications visibles au travers d'une fenêtre de lecture 70 ménagée dans le boîtier supérieur 54, constituent l'ensemble indicateur de volume. Ces tambours sont fixés sur la dite tige creuse filetée 56 de manière à l'entourer tout en autorisant son mouvement au travers des tambours qui sont par ailleurs équipés de moyens d'entraînement aptes à commander le mouvement relatif des tambours en dépendance du mouvement de rotation de ladite tige creuse filetée 56. Des moyens de blocage de la tige creuse filetée sont enfin prévus pour immobiliser cette dernière dans la position choisie par l'opérateur.

Le mécanisme de réglage est donc destiné à faire varier les volumes de liquide à distribuer. L'ensemble indicateur de volume qui est couplé audit mécanisme de réglage permet ainsi de réaliser un affichage numérique du volume ainsi réglé.

La tige creuse filetée 56 doit pouvoir être rendue solidaire du manchon 60 dont l'extrémité inférieure constitue la butée de limitation de course vers le haut du piston 20. Sur la tige creuse filetée 56 se trouve monté extérieurement l'écrou d'entraînement 62 susceptible d'entraîner la tige creuse filetée 56 en rotation. Par suite, le boîtier supérieur 54 de la pipette doit donc comporter des ouvertures adéquates permettant d'actionner l'écrou d'entraînement 62 à partir de l'extérieur du boîtier 54.

Le mécanisme de réglage selon l'invention comporte également des moyens de blocage de la tige creuse filetée, aptes à immobiliser cette dernière dans la position choisie par l'opérateur. Dans le mode de réalisation décrit, ces moyens de blocage de la tige creuse filetée 56 sont par exemple constitués par une bague de freinage 72 comprimée entre la surface intérieure du boîtier supérieur 54 et une gorge ménagée sur la surface extérieure de l'écrou d'entraînement 62. Cette bague de freinage 72 est réalisée de façon avantageuse en une matière souple élastiquement déformable, résistant à l'usure, et à l'arrachement. A cet effet, on utilisera par exemple une bague de freinage réalisée en une matière choisie parmi les résines fluorocarbonées, le polychloroprène et de préférence les polyuréthanes.

De manière à éviter un échappement vers le haut, hors du boîtier supérieur 54, de l'ensemble du mécanisme de réglage, par exemple à la suite d'une manoeuvre intempestive de l'écrou d'entraînement 62, l'extrémité inférieure de la tige creuse filetée 56 peut se terminer par une butée (non représentée) faisant saillie radialement vers l'extérieur. Cette butée peut par exemple être réalisée sous la forme d'une rondelle fixée à l'extrémité de la tige 56.

Un autre avantage de la pipette selon l'invention, réside dans le fait que l'opérateur peut très facilement effectuer un préréglage des volumes de solution à distribuer, en actionnant l'écrou d'entraînement 62 qui provoque le déplacement en rotation et en translation de la tige creuse filetée extérieurement 56. Le réglage du volume s'effectue donc par la rotation de l'écrou 62 qui provoque une translation de la tige creuse filetée 56 et du fourreau 26. Cette translation provoque le déplacement de la butée de limitation de course vers le haut du fourreau 26 et du piston 20, réglant ainsi sa course utile et, partant, le volume de liquide à distribuer.

Selon une autre caractéristique de l'invention, l'ensemble indicateur de volume logé dans le boîtier supérieur 54 de la pipette traduit de façon exacte et facilement lisible la position du mécanisme de réglage du volume. Pour ce faire, une série de tambours indicateurs de volume 64, 66 et 68, enfilés chacun sur la tige creuse filetée extérieurement 56, est empilée à l'intérieur du boîtier supérieur 54 entre l'insert 58 et un couvercle encliquetable 74.

Dans le mode de réalisation illustré à la figure 2, les tambours 64, 66 et 68 indiquent respectivement les réglages de volume en unité, dizaines et centaines de microlitres. Il est cependant parfaitement possible de prévoir plus ou moins de tambours gradués en une unité quelconque désirée. Pour coupler l'ensemble indicateur de volume avec l'ensemble de réglage du volume, la tige creuse filetée 56 comprend d'un bout à l'autre une rainure longitudinale, non représentée sur le dessin annexé. Le tambour des unités 68 comprend une protubérance non représentée faisant saillie vers l'extérieur qui s'insère dans ladite rainure afin de faire tourner le tambour 68 avec la tige creuse filetée 56, tout en permettant le déplacement axial de ladite tige par rapport au tambour. Le tambour des dizaines 66 et le tambour des centaines 64 sont libres en rotation indépendamment de la tige creuse filetée 56. Le mouvement des tambours l'un par rapport à l'autre est réalisé de façon conventionnelle. Pour une rotation complète du tambour des unités 68, seule une paire de dents entraîne un rocher 76 monté sur un axe 78 qui pénètre dans le couvercle encliquetable 74. Le rocher 76 entraîne des engrenages continus sur le tambour des dizaines 66 pour le déplacer d'un dizième de tour. De même, une rotation complète du tambour des dizaines 66 provoque un mouvement unitaire du tambour des centaines 64 par le jeu d'une simple paire de dents d'engrenage, d'un rocher 80 supplémentaire et d'un engrenage continu sur le tambour des centaines 64. La fenêtre transparente de lecture 70 ménagée dans la paroi du boîtier supérieur permet la lecture des tambours indicateurs.

Pour assurer la précision de l'indication donnée par l'ensemble indicateur de volume, il a été prévu un réglage du zéro. Lors de la fabrication et du montage de la pipette selon l'invention, les tambours 64, 66 et 68 sont montés de telle manière que l'indication du zéro apparaisse lorsque la tige creuse filetée 56 est entièrement vissée vers l'intérieur, à peu près jusqu'à ce que la surface d'arrêt de la butée inférieure soit au contact de la surface supérieure du fourreau 26 dans sa position la plus basse. C'est précisément pour régler la position du zéro que la fonction du manchon 60 entre en jeu. On tourne l'écrou d'entraînement 62 jusqu'à ce que l'ensemble indicateur du volume indique le zéro. A ce moment, on desserre les vis pointeau 82 et on peut agir sur la molette de calibrage 84 en laissant la tige creuse filetée 58 immobile. Au cours de cette rotation de la molette de calibrage 84, la lecture de l'indicateur de volume n'est pas modifiée. Cependant la rotation de ladite molette fait avancer ou reculer le manchon 60 par rapport à la tige creuse filetée 56, précisément pour se mettre en position de volume nul. Lorsqu'on a atteint cette position, on serre les vis pointeau 82 et le réglage du zéro se trouve ainsi terminé.

Bien entendu la présente invention n'est pas limitée aux modes de réalisation particuliers décrits, mais il est parfaitement possible, sans pour autant sortir du cadre de la présente invention, d'en imaginer un certain nombre de variantes de détails.

## Revendications

1. Pipette de précision à déplacement positif destinée au prélèvement et à la distribution de petites quantités de liquide, du type comportant:

—un corps essentiellement tubulaire (10) obturé respectivement à son extrémité supérieure par un bouchon (12) présentant un orifice central et à son extrémité inférieure par une capsule (16) recevant de façon amovible un tube capillaire calibré (24);

—un piston commandé (20), dans son déplacement étanche à l'intérieur dudit tube capillaire, par une tige de commande (22) traversant l'orifice ménagé dans ledit bouchon supérieur;

—un organe de pincement (32) dont les branches à élasticité radiale assurent la préhension dudit piston par son extrémité supérieure, et

—un fourreau apte (26) à se déplacer dans ledit corps tubulaire (10), entre une butée supérieure et une butée inférieure, à l'encontre d'une force de rappel élastique vers le haut exercée par un ressort principal (30), pipette caractérisée en ce que l'organe de pincement 32 de l'extrémité supérieure du piston 20 est solidaire de l'extrémité inférieure de ladite tige de commande 22 du piston 20 et se trouve logé à l'intérieur dudit fourreau 26, l'ouverture dudit organe de pincement 32 par écartement radial de ses branches élastiques étant obtenue par déplacement dudit organe de pincement 32 à l'encontre de la force exercée par un second ressort 34 qui présente une résistance très supérieure à celle dudit ressort principal 30 et qui se trouve mis en place entre l'extrémité inférieure de la tige de commande 22 du piston 20 et un épaulement interne 36 dudit fourreau 26.

2. Pipette selon la revendication 1, caractérisée par le fait que l'organe de pincement 32 du piston est constitué par une pièce généralement tubulaire dont l'extrémité supérieure est solidaire de la tige de commande 22 du piston 20 et dont l'extrémité inférieure se termine par une pluralité de branches élastiques 38 tendant à s'écarter radialement, et que ledit second ressort 34 tend à rappeler l'organe de pincement 32 vers le haut dans une zone rétrécie 40 du fourreau 26, laquelle sollicite ainsi lesdites branches 38 à la fermeture.

3. Pipette selon la revendication 2, caractérisée par le fait que, du côté de ses branches élastiques 38, l'ouverture de l'organe de pincement 32 présente un chanfrein 42 facilitant l'introduction de l'extrémité supérieure du piston 20 dans ledit organe de pincement 32.

4. Pipette selon l'une des revendications 1 à 3, caractérisée par le fait que le ressort principal 30 prend appui d'une part sur la surface intérieure de la capsule 16 et d'autre part sur un épaulement extérieur 44 du fourreau 26.

5. Pipette selon l-une des revendications 1 à 4, caractérisée par le fait qu'au repos, l'extrémité inférieure de l'organe de pincement 32 est en retrait par rapport à l'orifice inférieur 46 du fourreau 26.

6. Pipette selon l'une des revendications 1 à 5, caractérisée par le fait que le diamètre de l'ouverture de la partie inférieure du fourreau 26 est suffisant pour permettre l'écartement des branches élastiques 38 de l'organe de pincement 32.

7. Pipette selon l'une des revendications 1 à 6, caractérisée par le fait que la longueur de la partie dudit bouchon 12 pénétrant dans le corps tubulaire 10 peut être calibrée à plusieurs valeurs prédéterminées correspondant à des volumes de liquide donnés.

8. Pipette selon l'une des revendications 1 à 7, caractérisée par le fait que la butée inférieure limitant la course vers le bas dudit fourreau 26 et dudit piston 20 est constituée par la surface supérieure de la capsule 16 obturant l'extrémité inférieure dudit corps tubulaire 10.

9. Pipette selon l'une des revendications 1 à 8, caractérisée par le fait que la butée supérieure limitant la course vers le haut dudit fourreau 26 et dudit piston 20 est constituée par la surface inférieure du bouchon 12 obturant l'extrémité supérieure dudit corps tubulaire 10.

10. Pipette selon l'une des revendications 1 à 8, caractérisée par le fait que la butée supérieure limitant la course vers le haut dudit fourreau 26 et dudit piston 20 est constituée par une butée réglable en position verticale au moyen d'un mécanisme de réglage couplé à un ensemble indicateur.

11. Pipette selon la revendication 10, caractérisée par le fait que le mécanisme de réglage couplé à l'ensemble indicateur de volume est constitué par:

—une tige creuse filetée extérieurement 56 qui coopère avec un insert fileté intérieurement 58 fixé de façon immobile en rotation et en translation à l'intérieur du boîtier 54, ladite tige creuse 56 étant agencée pour entraîner dans son mouvement la butée supérieure réglable limitant vers le haut la course dudit fourreau 26;

—un écrou de réglage 62 apte à être actionné de l'extérieur du boîtier 54 pour entraîner en rotation ladite tige creuse filetée 56.

—des tambours 64, 66 et 68 indicateurs du volume à distribuer, portant des indications visibles au travers d'une fenêtre de lecture 70 ménagée dans le boîtier 54, lesdits tambours 64, 66 et 68 étant fixés sur ladite tige creuse filetée 56 de manière à l'entourer tout en autorisant son mouvement au travers desdits tambours par ailleurs équipes de moyens d'entraînement aptes à commander le mouvement relatif des tambours en dépendance du mouvement de rotation de ladite tige creuse filetée 56, et

—des moyens de blocage 72 de ladite tige creuse filetée 56, aptes à immobiliser cette dernière dans la position choisie.

**Patentansprüche**

1. Präzisionpipette mit positiver Verstellung für die Entnahme und Verteilung kleiner Flüssigkeitsmengen, mit einem im wesentlichen rohrförmigen Körper (10), der an seinem oberen Ende durch einen Pfropfen (12) mit einer zentralen Öffnung und an seinem unteren Ende durch eine Kapsel (16) verschlossen ist, die ein herausnehmbares kalibriertes Kapillarrohr (24) aufnimmt, mit einem Kolben (20), der abdichtend im Innern des genannten Kapillarrohres durch eine Betätigungsstange (22) bewegt wird, die sich durch die in dem genennten oberen Pfropfen angeordnete Öffnung erstreckt, mit einem Zangenelement (32), dessen radial elastische Schenkel das Fassen des genannten Kolbens an seinem oberen Ende ermöglichen, und mit einer Hülse (26), die in dem rohrförmigen Körper (10), zwischen einem oberen und einem unteren Anschlag, gegen eine nach oben wirkende von einer Hauptfeder (30) ausgeübte Rückstellfederkraft bewegbar ist, dadurch gekennzeichnet, daß das Zangenelement (32) am oberen Ende des Kolbens (20) mit dem unteren Ende der Betätigungsstange (22) des Kolbens (20) verbunden und im Innern der Hülse (26) angeordnet ist, wobei die Öffnung des Zangenelementes (32), die durch Auseinanderspreizen ihrer elastischen Schenkel erfolgt, durch die Bewegung des Zangenelementes (32) gegen die von einer zweiten Feder (34) ausgeübten Kraft bewirkt wird, deren Widerstand viel größer ist als jener der Hauptfeder (30) und die zwischen dem unteren Ende der Betätigungsstange (22) des Kolbens (20) und einer inneren Schulter (36) der Hülse (26) angeordnet ist.

2. Pipette nach Anspruch 1, dadurch gekennzeichnet, daß das Zangenelement (32) des Kolbens von einem im wesentlichen rohrförmigen Teil gebildet wird, dessen oberes Ende mit der Betätigungsstange (22) des Kolbens (20) verbunden ist und dessen unteres Ende in eine Vielzahl von elastischen radial spreizbaren Schenkeln (38) ausläuft, und daß die zweite Feder (34), die Rückbewegung des Zangenelementes (32) nach oben in einen verengten Bereich (40) der Hülse (26) bewirkt, der auch der Schließung der Schenkel (38) bewirkt.

3. Pipette nach Anspruch 2, dadurch gekennzeichnet, daß die Öffnung des Zangenelementes (32) bei den elastischen Schenkeln (38) eine Abfassung (42) aufweist, die das Einführen des oberen Endes des Kolbens (20) in das Zangenelement (32) erleichtert.

4. Pipette nach einem der Ansprüche 1 bis 3, dadurch gekennzeichnet, daß die Hauptfeder (30) einerseits auf der Innenfläche der Kapsel (16) und andererseits auf einer äußeren Schulter (44) der Hülse (26) aufliegt.

5. Pipette nach einem der Ansprüche 1 bis 4, dadurch gekennzeichnet, daß das untere Ende des Zangenelementes (32) in Ruhestellung in bezug auf die untere Öffnung (46) der Hülse (26) vertieft liegt.

6. Pipette nach einem der Ansprüche 1 bis 5, dadurch gekennzeichnet, daß der Durchmesser der Öffnung des unteren Teiles der Hülse (26) groß genug ist, um das Spreizen der elastischen Schenkel (38) des Zangenelementes (32) zu ermöglichen.

7. Pipette nach einem der Ansprüche 1 bis 6, dadurch gekennzeichnet, daß die Länge des Teiles des Pfropfens (12), der in den rohrförmigen Körper (10) eindringt, mit mehreren bestimmten Werten, entsprechend den gegebenen Flüssigkeitsvolumina, kalibriert werden kann.

8. Pipette nach einem der Ansprüche 1 bis 7, dadurch gekennzeichnet, daß der Anschlag, der die Abwärtsbewegung der Hülse (26) und des Kolbens (20) begrenzt, von der oberen Fläche der Kapsel (16), die das untere Ende des rohrförmigen Körpers (10) verschließt, gebildet wird.

9. Pipette nach einem der Ansprüche 1 bis 8, dadurch gekennzeichnet, daß der obere Anschlag, der die Aufwärtsbewegung der Hülse (26) und des Kolbens (20) begrenzt, von der unteren Fläche des Pfropfens (12), der das obere Ende des rohrförmigen Körpers (10) verschließt, gebildet wird.

10. Pipette nach einem der Ansprüche 1 bis 8, dadurch gekennzeichnet, daß der obere Anschlag, der die Aufwärtsbewegung der Hülse (26) und des Kolbens (20) begrenzt, ein Anschlag ist, der mit Hilfe eines mit einer Anzeigevorrichtung verbundenen Verstellmechanismus höhenverstellbar ist.

11. Pipette nach Anspruch 10, dadurch gekennzeichnet, daß der Verstellmechanismus, der mit der Anzeigevorrichtung für das Volumen verbunden ist, eine mit einem Außengewinde versehene Hohlstange (56) umfaßt, die mit einem mit einem Innengewinde versehenen Einsatz (58) so verbunden ist, daß sie gegen Drehung und Verschiebung im Innern des Gehäuses (54) gesichert ist, wobei die Hohlstange (56) so angeordnet ist, daß sie bei ihrer Bewegung den oberen verstellbaren Anschlag mitnimmt, der die Aufwärtsbewegung der Hülse (26) begrenzt, weiters eine Stellmutter (62), die von der Außenseite des Gehäuses (54) betätigbar ist, um die mit einem Gewinde versehene Hohlstange (56) zu drehen, Ringe (64, 66 und 68) zur Anzeige des zu verteilenden Volumens mit Anzeigen, die durch ein im Gehäuse (54) angeordnetes Ablesefenster (70) sichtbar sind, wobei die Ringe (64, 66 und 68) an der mit einem Gewinde versehenen Hohlstange (56) so befestigt sind, daß sie diese umgeben und trotzdem ihre Bewegung durch die Ringe hindurch ermöglichen, wobei diese Ringe weiters mit Mitnehmervorrichtungen versehen sind, die die Relativbewegung der Ringe in Abhängigkeit von der Drehbewegung der hohlen Gewindestange steuern, un Blockiermittel (72) der hohlen Gewindestange (56), die diese in einer gewählten Stellung festhalten.

## Claims

1. A precision pipette of positive displacement for the removal and distribution of small quantities of liquid, of the type comprising:
—a substantially tubular body (10) which is sealed respectively at its top end by a stopper (12) which has a central orifice and at its bottom end by a capsule (16) receiving in a removable manner a calibrated capillary tube (24);
—a piston (20) which is controlled in its checked displacement inside said capillary tube by a control rod (22) penetrating the orifice provided in said top stopper;
—a pinching member 32, the arms of which having a radial elasticity ensure the grip of said piston by its top end, and
—a casing (26) which is capable of being displaced in said tubular body (10) between a top stop and a bottom stop upwards against an elastic restoring force exerted by a main spring (30),
—the pipette characterised in that the pinching member (32) of the top end of the piston (20) is integral with the bottom end of said control rod (22) of the piston (20) and is lodged inside said casing (26), the opening of said pinching member (32) by a radial spreading-apart action of its elastic arms being obtained by the displacement of said pinching member (32) against the force exerted by a second spring (34) which has a much greater resistance than that of said main spring (30) and which is positioned between the bottom end of the control rod (22) of the piston (20) and an internal shoulder (36) of said casting (26).

2. A pipette according to claim 1, characterised in that the pinching member (32) of the piston comprises a generally tubular part, the top end of which is solid with the control rod (22) of the piston (20), and the bottom end of which is terminated by a plurality of elastic arms (38) which tend to move apart radially, and said second spring (34) tends to draw back the pinching member (32) upwards into a contracted zone (40) of the casing (26), which zone thus urges said arms (38) to close.

3. A pipette according to claim 2, characterised in that at the side of its elastic arms (38), the opening of the pinching member (32) has a chamfer (42) facilitating the introduction of the top end of the piston (20) into said pinching member (32).

4. A pipette according to one of the claims 1 to 3, characterised in that the main spring (30) rests at one end on the internal surface of the capsule (16) and at the other end on an external shoulder (44) of the casing (26).

5. A pipette according to one of claims 1 to 4, characterised in that while idle, the bottom end of the pinching member (32) is contracted with respect to the bottom opening (46) of the casing (26).

6. A pipette according to one of claims 1 to 5, characterised in that the diameter of the opening of the bottom part of the casing (26) is large enough to allow the separation of the elastic arms (38) of the pinching member (32).

7. A pipette according to one of claims 1 to 6, characterised in that the length of the part of said stopper (12) penetrating inside the tubular body (10) may be calibrated with several predetermined values corresponding to given volumes of liquid.

8. A pipette according to one of claims 1 to 7, characterised in that the bottom stop restricting the path towards the bottom of said casing (26) and of said piston (20) is formed by the top surface of the capsule (16) sealing the bottom end of said tubular body (10).

9. A pipette according to one of claims 1 to 8, characterised in that the top stop restricting the path towards the top of said casing (26) and of said piston (20) is formed by the bottom surface of the stopper (12) sealing the top end of said tubular body (10).

10. A pipette according to one of claims 1 to 8, characterised in that the top stop restricting the path towards the top of said casing (26) and of said piston (20) is formed by a stop which may be adjusted in a vertical position by means of an adjusting mechanism coupled to an indicator assembly.

11. A pipette according to claim 10, characterised in that the adjusting mechanism coupled to the volume indicator assembly comprises the following:

—an externally threaded hollow rod (56) which cooperates with an internally threaded insert (58) which is attached in an immobile manner in rotation and in translation to the inside of a case (54), said hollow rod (56) being positioned so that it entrains in its movement the adjustable top stop inwardly restricting the path of said casing (26);

—an adjusting screw (62) which is capable of being activated from outside the case (54) to entrain in rotation said threaded hollow rod (56);

—drums (64), (66) and (68) indicating the volume to be distributed, bearing indications which are visible through a reading window (70) made in the case (54), said drums (64), (66) and (68) being attached to said threaded hollow rod (56) so that they surround it while allowing its movement through said drums moreover equipped with entraining means which are capable of controlling the relative movement of the drums depending on the rotational movement of said threaded hollow rod (56), and

—means (72) for blocking said threaded hollow rod (56), which are capable of immobilising the latter in a selected position.

FIG.2

FIG.1